# EUROPEAN PATENT APPLICATION

(11) **EP 4 708 456 A1**
(43) Date of publication of application: **11.03.2026**
(21) Application number: 24932768.5
(22) Date of filing: 11.12.2024
(51) Int. Cl.: H01M 10/613, H01M 10/625, H01M 10/647, H01M 10/6551, H01M 10/6552, H01M 10/6567, H01M 50/204, H01M 50/244, H01M 50/249, H01M 50/358

(54) **BATTERY PACK**

(30) Priority: 28.03.2024 KR 20240042537
(71) Applicant: LG Energy Solution, Ltd., Seoul 07335 (KR)
(72) Inventor: AHN, Moon-Youl, Daejeon 34122 (KR)
(74) Representative: Hoffmann Eitle
(86) International application number: PCT/KR2024/096682
(87) International publication number: WO 2025/206536

(57) **Abstract**

Disclosed is a battery pack. The battery pack includes a case providing an inner space and having an opening; a plurality of battery cells positioned inside the case; and a cooling channel configured to partition the opening.

## Description

### TECHNICAL FIELD

The present disclosure relates to a battery pack.

The present application claims priority to Korean Patent Application No. 10-2024-0042537 filed on March 28, 2024 in the Republic of Korea, the disclosure of which is incorporated herein by reference.

### BACKGROUND ART

As the demand for portable electronic products such as laptops, video cameras, and portable phones is rapidly increasing, and robots, electric vehicles, or the like are commercialized in earnest, research on high-performance secondary batteries capable of repeated charging and discharging is actively underway.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. In addition, multiple battery modules may be connected to each other to form a battery pack.

However, if a plurality of secondary batteries (battery cells) or a plurality of battery modules are crowded in a small space, they may be vulnerable to thermal events. In particular, if an event such as thermal runaway occurs in one battery cell, high temperature gas, flame, or heat may be generated. If the gases, flames, heat, etc. is transferred to other battery cells included in the same battery module, an explosive chain reaction situation such as thermal propagation may occur. Also, this chain reaction not only causes accidents such as fire or explosion in the corresponding battery module, but may also cause fire or explosion in other battery modules.

Moreover, in the case of medium to large-sized battery packs such as electric vehicles, a large number of battery cells and battery modules are included to increase output and/or capacity, so the risk of thermal chain reaction may increase further. Furthermore, in the case of a battery pack mounted on an electric vehicle, etc., users such as drivers may be present nearby. Therefore, if a thermal event occurring in a specific battery cell or module is not properly controlled and a chain reaction occurs, it may cause not only great property damage but also human casualties. Therefore, it is necessary to properly control thermal events occurring in battery cells or modules to improve the thermal stability of the battery pack.

### DISCLOSURE

### Technical Problem

The present disclosure is designed to solve these and other problems.

The present disclosure is directed to providing a battery pack with improved safety when a thermal event occurs.

The present disclosure is also directed to providing a battery pack that may suppress heat propagation by providing an independent venting path for each battery module when a thermal event occurs.

The present disclosure is also directed to providing a battery pack that may suppress the emission of ignitable particles and flame and discharge the ignitable particles and flame by lowering the temperature of a venting gas when a thermal event occurs.

The present disclosure is also directed to providing a battery pack allowing easy venting control when a thermal event occurs.

### Technical Solution

In one aspect of the present disclosure, there is provided a battery pack comprising: a case providing an inner space and having an opening; a plurality of battery cells positioned inside the case; and a cooling channel configured to partition the opening.

In addition, the battery pack may further comprise a venting device configured to communicate with the opening.

In addition, the venting device may cover the opening.

In addition, the cooling channel may include a body having a flow path formed therein; and a spraying portion formed in the body.

In addition, the spraying portion may be configured to communicate an inside and an outside of the body when a thermal event occurs.

In addition, the spraying portion may be configured to have a thinner thickness than surroundings.

In addition, the spraying portion may include an injection hole configured to communicate the inside and the outside of the body; and a cap configured to block the injection hole.

In addition, a melting point of the cap may be lower than a melting point of the body.

In addition, the cooling channel may be formed in plurality, and the plurality of cooling channels may be arranged in an upper and lower direction.

In addition, the spraying portion may be formed only in an uppermost cooling channel among the plurality of cooling channels.

In addition, the battery pack may further comprise a flow guide provided on an outer surface of the cooling channel.

In addition, the battery pack may further comprise a first mesh cover located between the cooling channel and the plurality of battery cells.

In addition, the battery pack may further comprise a second mesh cover located at an outside of the cooling channel.

In addition, the case may include a base plate; and a side wall installed on an upper surface of the base plate, and the opening may be formed in the side wall.

In addition, the case may further include a heatsink having a cooling flow path formed therein, and the cooling channel may be in communication with the cooling flow path of the heatsink.

In another aspect of the present disclosure, there is also provided a vehicle, comprising the battery pack according to the present disclosure.

### Advantageous Effects

According to at least one of the embodiments of the present disclosure, it is possible to improve thermal stability of a battery pack.

According to at least one of the embodiments of the present disclosure, the exhaust temperature of the venting gas may be lowered.

According to at least one of the embodiments of the present disclosure, venting control of a battery pack may be facilitated.

According to at least one of the embodiments of the present disclosure, emission of ignitable particles may be blocked.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery pack according to an embodiment of the present disclosure.
FIG. 2 is a diagram showing the battery pack of FIG. 1, in which some components are exploded.
FIG. 3 is a diagram showing the battery pack of FIG. 2, in which some components are exploded.
FIG. 4 is an enlarged drawing showing a part A of FIG. 3.
FIG. 5 is a cross-sectional view taken along the cutting line B-B' of FIG. 4.
FIG. 6 is an enlarged drawing showing a part D of FIG. 5.
FIG. 7 is an enlarged drawing showing a part D of FIG. 5 when a thermal event occurs.
FIG. 8 is a drawing showing a modified embodiment of FIG. 5.
FIG. 9 is an enlarged drawing showing a part E of FIG. 8.
FIG. 10 is an enlarged drawing showing a part E of FIG. 8 when a thermal event occurs.
FIG. 11 is a drawing showing a modified embodiment of FIG. 4.
FIG. 12 is a cross-sectional view taken along the cutting line C-C' of FIG. 4.
FIG. 13 is a cross-sectional view taken along the cutting line F-F' of FIG. 3.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

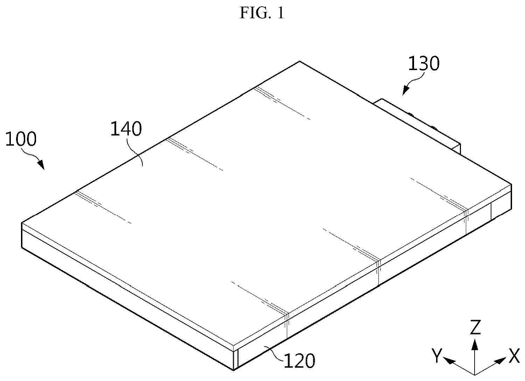

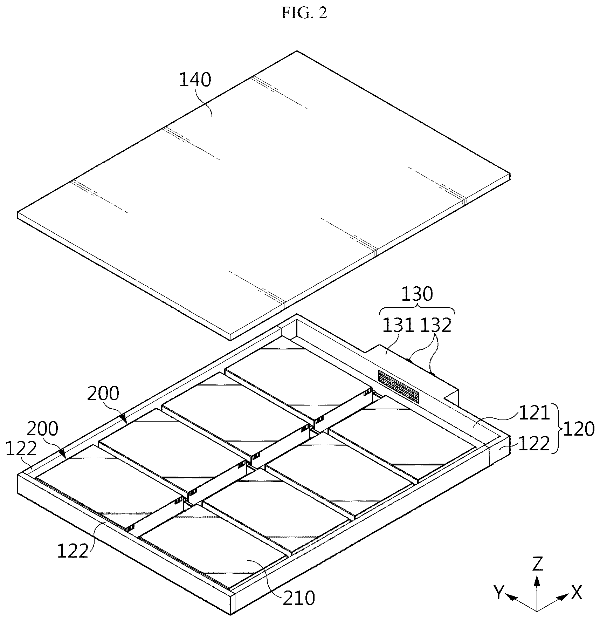

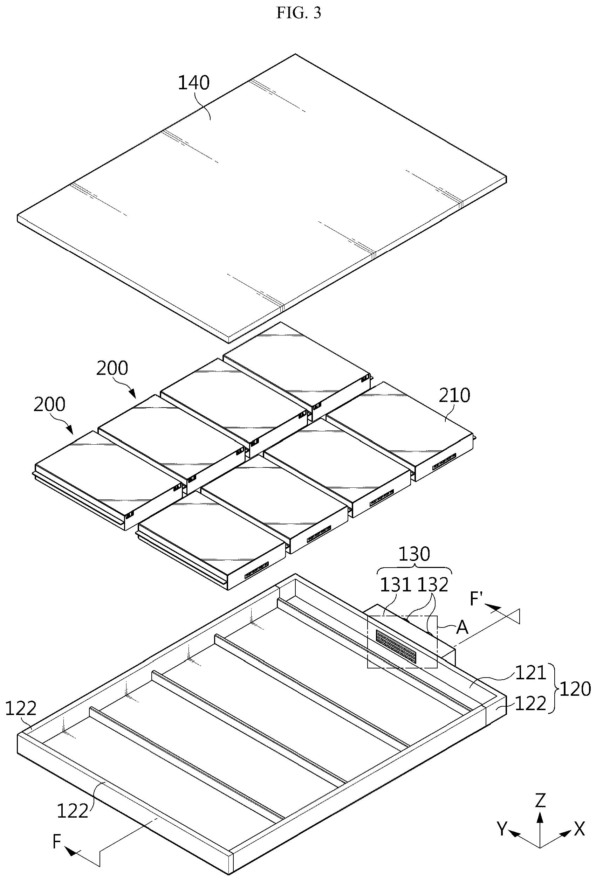

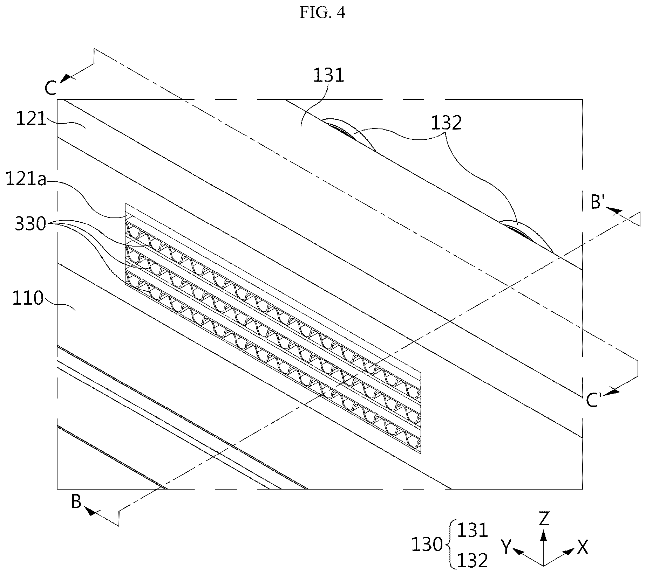

FIG. 1 is a diagram showing a battery pack according to an embodiment of the present disclosure. FIG. 2 is a diagram showing the battery pack of FIG. 1, in which some components are exploded. FIG. 3 is a diagram showing the battery pack of FIG. 2, in which some components are exploded. FIG. 4 is an enlarged drawing showing a part A of FIG. 3.

Referring to FIGS. 1 to 4, the battery pack according to an embodiment of the present disclosure may include a case 100, a plurality of battery cells, and a cooling channel 300.

The case 100 may provide a space inside. Also, the case 100 may have an opening 121a. The opening 121a may communicate the inside and the outside of the case 100.

The plurality of battery cells may be located in the inner space provided by the case 100. At this time, the battery cell may mean a secondary battery. In addition, the battery cell may have a pouch shape. However, the shape of the battery cell is not limited to the pouch shape and may have various shapes such as a cylindrical shape or a rectangular parallelepiped shape. The plurality of battery cells may be stacked along one direction. The plurality of battery cells may configure the battery module 200. For example, the battery module 200 may include a module case 210 and a plurality of battery cells located inside the module case 210. In addition, the battery module 200 may be provided in plurality.

The cooling channel 300 may be installed in the opening 121a. The cooling channel 300 may partition the opening 121a. The cooling channel 300 may have a flow path formed therein. The cooling fluid may flow inside the cooling channel 300.

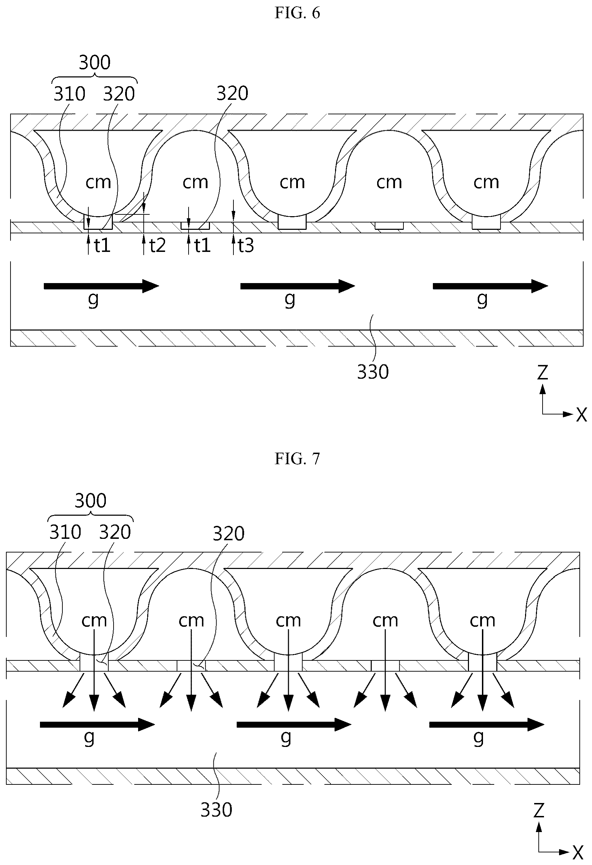

According to this configuration of the present disclosure, the thermal safety of the battery pack may be improved. When a thermal event occurs from a battery cell, a venting gas g (see FIG. 6) may be generated. The venting gas g may be discharged to the outside of the battery pack through the opening 121a. At this time, the venting gas g may exchange heat with the cooling channel 300 while passing through the opening 121a. As a result, the temperature of the venting gas g may be lowered. Since the venting gas g with the lowered temperature is discharged to the outside of the battery pack, the thermal safety may be improved.

Referring to FIGS. 1 to 4, the case 100 of the battery pack according to an embodiment of the present disclosure may include a base plate 110. The base plate 110 may have a rectangular shape.

In addition, the case 100 may include a side wall 120. The side wall 120 may be installed, coupled, fastened, fixed, or attached to an upper surface of the base plate 110. The side wall 120 may extend along an edge of the base plate 110. The side wall 120 may be provided in plurality. For example, four side walls 120 may extend along an edge of the base plate 110, respectively. The side wall 120 may include a first side wall 121 and a second side wall 122. The first side wall 121 may have an opening 121a. The opening 121a may have a rectangular shape. The base plate 110 and the side wall 120 may form a space therein.

The case 100 may include a pack cover 140. The pack cover 140 may be a rectangular plate. The pack cover 140 may be installed, coupled, fastened, fixed or attached to the side wall 120. The pack cover 140 may cover the space formed by the base plate 110 and the side wall 120.

The plurality of battery cells or the plurality of battery modules 200 may be installed, coupled, fastened, fixed or attached to the upper surface of the base plate 110.

The cooling channel 300 may be installed in the opening 121a or the first side wall 121. The cooling channel 300 may partition the opening 121a.

According to this configuration of the present disclosure, the thermal safety of the battery pack may be improved. The venting gas g may be discharged with a lowered temperature through the opening 121a of the first side wall 121.

Referring to FIGS. 1 to 4, the battery pack according to an embodiment of the present disclosure may further include a venting device 130 in communication with the opening 121a.

According to this configuration of the present disclosure, the thermal safety of the battery pack may be improved. The venting gas g with a lowered temperature may be discharged to the outside of the battery pack through the venting device 130.

Referring to FIGS. 1 to 4, the venting device 130 of the battery pack according to an embodiment of the present disclosure may cover the opening 121a. The venting device 130 may include a venting cover 131 and a gas valve 132. The venting cover 131 may cover the opening 121a or the cooling channel 300. In addition, the venting cover 131 may be installed, coupled, fastened, fixed, or attached to the first side wall 121. The gas valve 132 may be installed in the venting cover 131. The gas valve 132 may face the opening 121a or the cooling channel 300.

According to this configuration of the present disclosure, the thermal safety of the battery pack may be improved. When the internal pressure of the battery pack increases, the gas valve 132 may be opened. The venting gas g may be discharged to the outside of the battery pack through the gas valve 132.

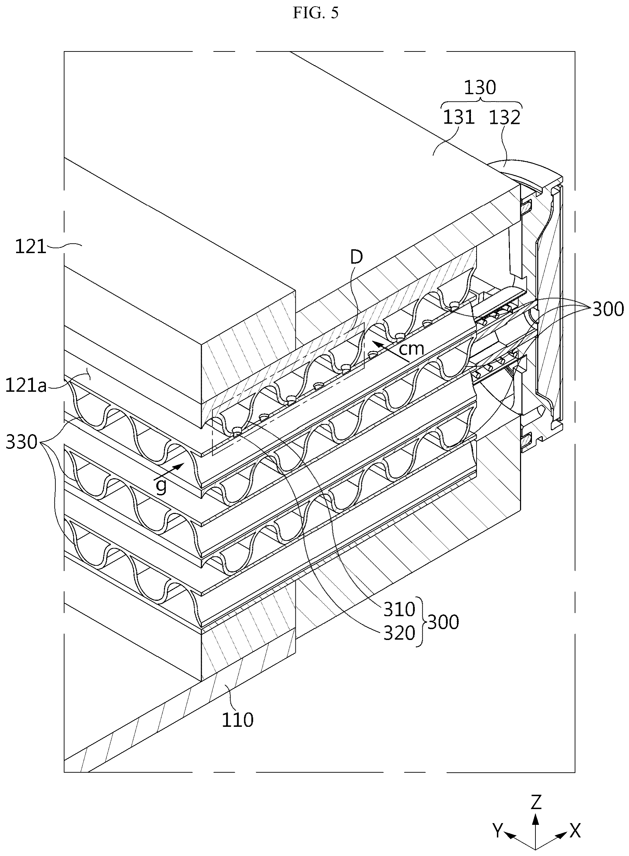

FIG. 5 is a cross-sectional view taken along the cutting line B-B' of FIG. 4. FIG. 6 is an enlarged drawing showing a part D of FIG. 5. FIG. 7 is an enlarged drawing showing a part D of FIG. 5 when a thermal event occurs.

Referring to FIGS. 5 to 7, the cooling channel 300 according to an embodiment of the present disclosure may be provided in plurality. The plurality of cooling channels 300 may be arranged along the upper and lower direction or the Z-axis direction. In addition, the plurality of cooling channels 300 may partition the opening 121a. The venting gas g may flow between neighboring cooling channels 300. The plurality of cooling channels 300 may extend along the left-right direction or the Y-axis direction.

According to this configuration of the present disclosure, the thermal safety of the battery pack may be improved. By providing the cooling channel 300 in plurality, the temperature of the venting gas g may be lowered more.

Referring to FIGS. 5 to 7, the cooling channel 300 according to an embodiment of the present disclosure may be provided in plurality. The plurality of cooling channels 300 may be arranged along the front and rear direction or the X-axis direction.

According to this configuration of the present disclosure, the thermal safety of the battery pack may be improved. By providing the cooling channel 300 in plurality, the temperature of the venting gas g may be lowered more.

Referring to FIGS. 5 to 7, the cooling channel 300 of the battery pack according to an embodiment of the present disclosure may include a body 310 and a spraying portion 320. The body 310 may have a flow path formed therein. The spraying portion 320 may be formed in the body 310. The spraying portion 320 may be configured to spray the cooling medium cm flowing inside the body 310.

According to this configuration of the present disclosure, the thermal safety of the battery pack may be improved. The temperature of the venting gas g may be lowered due to heat exchange with the cooling channel 300. In addition, the venting gas g may be cooled by the cooling medium cm discharged through the spraying portion 320. The temperature of the venting gas g may be lowered by vaporizing the discharged cooling medium cm. In addition, the relative concentration or partial pressure of oxygen may be lowered due to the vaporized cooling medium cm. As a result, the risk of fire may be reduced.

Referring to FIGS. 5 to 7, the spraying portion 320 of the battery pack according to an embodiment of the present disclosure may be configured to communicate the inside and the outside of the body 310 when a thermal event occurs. As a result, the cooling medium cm flowing through the body 310 may be discharged through the opening 121a.

According to this configuration of the present disclosure, the temperature of venting gas g may be lowered, and the risk of fire may be reduced.

Referring to FIGS. 5 to 7, the cooling channel 300 of the battery pack according to an embodiment of the present disclosure may further include a flow guide 330. The flow guide 330 may be formed on an outer surface of the cooling channel 300 or the body 310. The flow guide 330 may extend along the front and rear direction or the X-axis direction. In addition, the flow guide 330 may extend along the right and left direction or the Y-axis direction. Also, the flow guide 330 may be provided in plurality. The plurality of flow guides 330 may be located between neighboring cooling channels 300. The plurality of cooling channels 300 and the plurality of flow guides 330 may be arranged alternately. In addition, the plurality of cooling channels 300 and the plurality of flow guides 330 may be arranged along the upper and lower direction or the Z-axis direction.

According to this configuration of the present disclosure, the thermal safety of the battery pack may be improved. The venting gas g may be diffused through the flow guide 330. As a result, the flow path of the venting gas g may be extended. The temperature may be lowered by diffusing the venting gas g.

Referring to FIGS. 5 to 7, the spraying portion 320 of the battery pack according to an embodiment of the present disclosure may be configured to have a thinner thickness than the surroundings. The thickness (t1) of the spraying portion 320 may be formed smaller than the thickness (t2) of the body 310 or the thickness (t3) of the flow guide 330 located around the surroundings. Since the spraying portion 320 is formed with a thin thickness, its heat resistance may be weakened. Due to this, the spraying portion 320 may easily melt when exposed to the venting gas g.

According to this configuration of the present disclosure, when a thermal event occurs, the spraying portion 320 may be damaged or melted by the high-temperature venting gas g. As a result, the spraying portion 320 may form a through hole. The cooling medium cm flowing through the body 310 may be discharged through the through hole.

Referring to FIGS. 5 to 7, the cooling channel 300 according to an embodiment of the present disclosure may be provided in plurality. The plurality of cooling channels 300 may be arranged along the upper and lower direction or the Z-axis direction. In addition, the spraying portion 320 may be formed only in the cooling channel 300 located at the uppermost position among the plurality of cooling channels 300. In addition, the spraying portion 320 may be formed in plurality in a cooling channels 300 located at the uppermost position among the plurality of cooling channels 300.

According to this configuration of the present disclosure, when a thermal event occurs, the cooling medium cm may be discharged from the cooling channel 300 located at the uppermost position. The discharged cooling medium cm may flow downward and enter the flow path of other cooling channels 300 and the venting gas g. As a result, the cooling medium cm may cool other cooling channels 300 and the venting gas g as a whole.

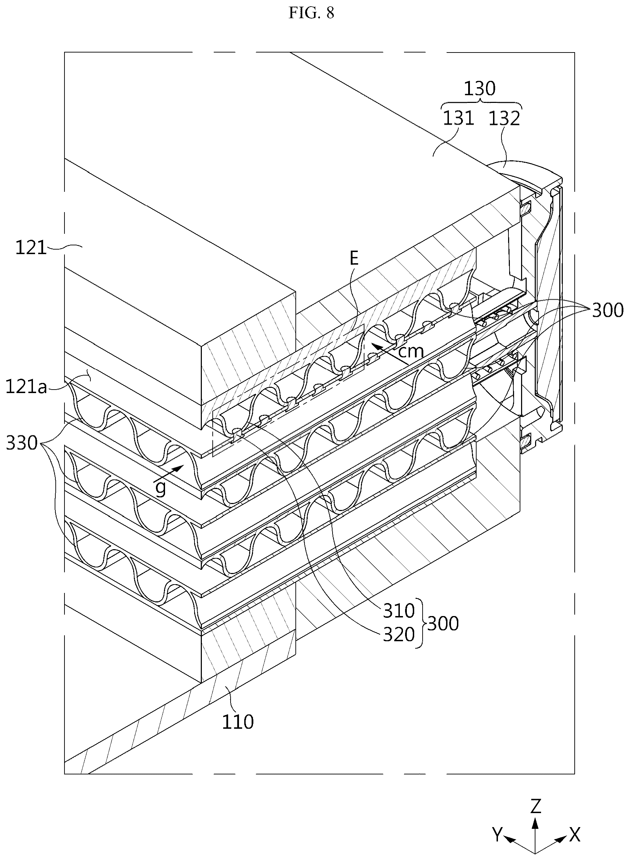

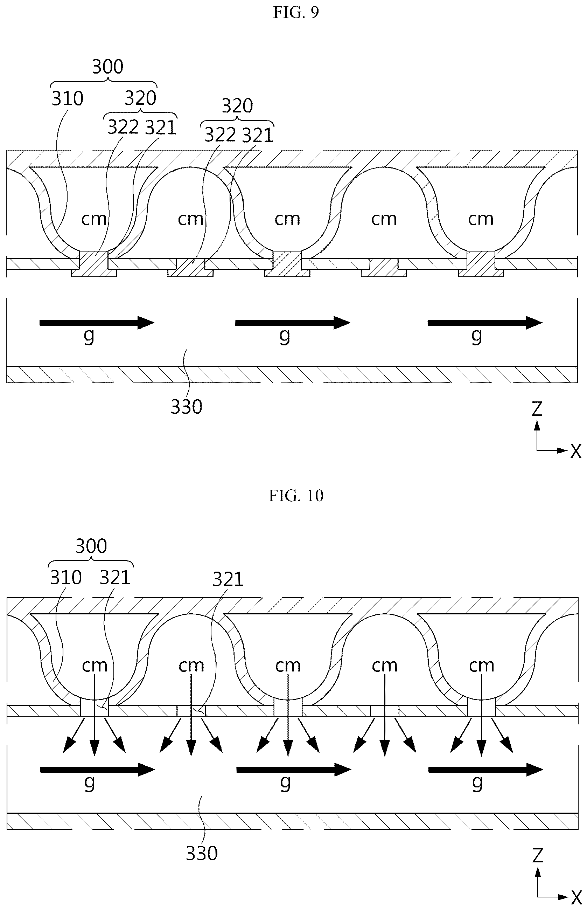

FIG. 8 is a drawing showing a modified embodiment of FIG. 5. FIG. 9 is an enlarged drawing showing a part E of FIG. 8. FIG. 10 is an enlarged drawing showing a part E of FIG. 8 when a thermal event occurs.

Referring to FIGS. 8 to 10, the spraying portion 320 of the battery pack according to an embodiment of the present disclosure may include an injection hole 321 communicating the inside and the outside of the body 310, and a cap 322 blocking the injection hole 321. The cap 322 may be provided at each injection hole 321. The cap 322 may seal the injection hole 321.

According to this configuration of the present disclosure, when a thermal event occurs, the cap 322 may be damaged or melted by the high temperature venting gas g. This may cause the injection hole 321 to open. The cooling medium cm flowing through the body 310 may be discharged through the injection hole 321.

Referring to FIGS. 8 to 10, the cap 322 of the battery pack according to an embodiment of the present disclosure may have a melting point lower than the melting point of the body 310.

The cap 322 may be made of a material that may melt at low temperatures. For example, the cap 322 may contain an alloy material having a melting point between 60 and 100°C. Alternatively, the cap 322 may contain a thermoplastic material having a melting point between 60 and 100°C.

According to this configuration of the present disclosure, the thermal safety of the battery pack may be improved. When a thermal event occurs from the battery module 200 or the battery cell, the cap 322 may melt or be broken, and the injection hole 321 may be opened.

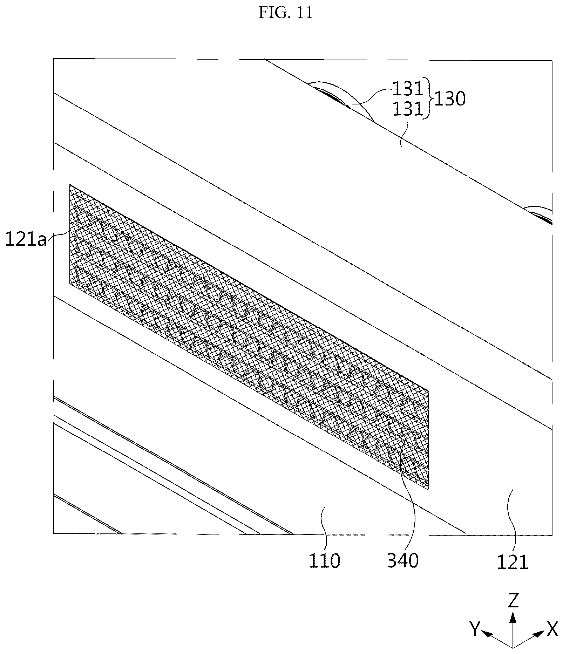

FIG. 11 is a drawing showing a modified embodiment of FIG. 4. Referring to FIG. 11, the battery pack according to an embodiment of the present disclosure may further include a first mesh cover 340. The first mesh cover 340 may be positioned between the cooling channel 300 and the plurality of battery cells. Alternatively, the first mesh cover 340 may be positioned between the cooling channel 300 and the plurality of battery modules 200. The first mesh cover 340 may be installed, coupled, fastened, fixed, or attached to the opening 121a. The first mesh cover 340 may contain a metal material.

According to this configuration of the present disclosure, the thermal safety of the battery pack may be improved. When a thermal event occurs, the first mesh cover 340 may block sparks or ignitable particles from being emitted to the outside of the battery pack.

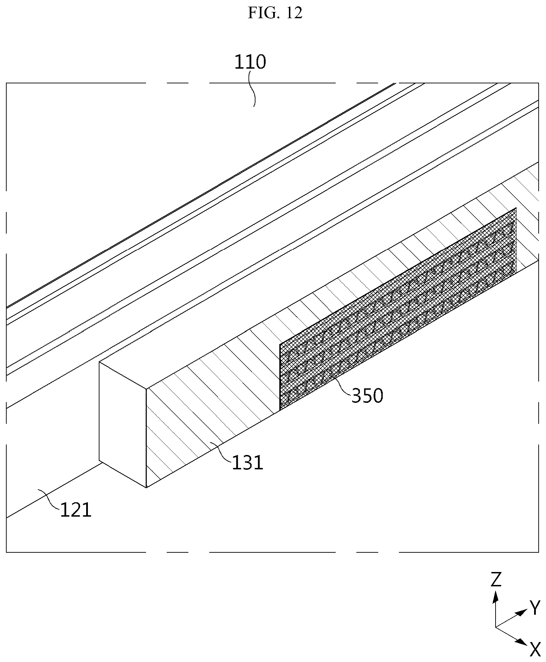

FIG. 12 is a cross-sectional view taken along the cutting line C-C' of FIG. 4. Referring to FIG. 12, the battery pack according to an embodiment of the present disclosure may further include a second mesh cover 350. The second mesh cover 350 may be located outside the cooling channel 300. Also, the second mesh cover 350 may be located inside the venting cover 131. Alternatively, the second mesh cover 350 may be located between the cooling channel 300 and the gas valve 132. The second mesh cover 350 may be installed, coupled, fastened, fixed, or attached to the opening 121a or the venting cover 131. The second mesh cover 350 may contain a metal material.

According to this configuration of the present disclosure, the thermal safety of the battery pack may be improved. When a thermal event occurs, the second mesh cover 350 may block sparks or ignitable particles from being emitted to the outside of the battery pack.

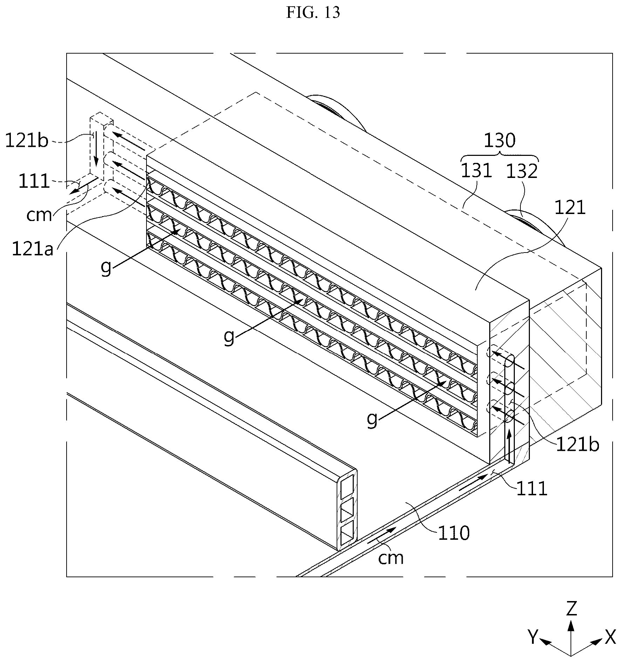

FIG. 13 is a cross-sectional view taken along the cutting line F-F' of FIG. 3. Referring to FIG. 13, the battery pack according to an embodiment of the present disclosure may further include a heatsink 110.

The heatsink 110 may be formed as part of the case 100. In this case, the heatsink 110 may be the base plate 110.

Alternatively, the heatsink may be provided as a separate component from the case 100. In this case, the heatsink 110 may be installed, coupled, fastened, fixed, or attached to the lower surface of the base plate 110.

The heatsink 110 may have a first cooling flow path 121b formed therein. The cooling medium cm may flow along the first cooling flow path 121b. Also, the second cooling flow path 111 of the heatsink 110 may be communicated with the cooling channel 300.

The first side wall 121 may have a second cooling flow path 111 formed therein. The first cooling flow path 121b of the heatsink 110 may be in communication with the second cooling flow path 111 of the first side wall 121. Also, the second cooling flow path 111 may be in communication with the cooling channel 300.

According to this configuration of the present disclosure, the cooling medium cm of the battery pack may flow through the heatsink 110 and the cooling channel 300. Accordingly, the pressure applied for the cooling medium cm to flow through the heatsink may act to cause the cooling medium cm to flow through the cooling channel 300. In addition, when a thermal event occurs, the cooling medium cm may be discharged at a high pressure through the cooling channel 300.

In addition, when the battery pack according to the present disclosure may further include various components, for example components of the battery pack known at the time of filing of this application, such as a BMS, a bus bar, a relay, a current sensor, etc.

A vehicle according to the present disclosure may include the battery pack according to the present disclosure described above. The battery pack according to the present disclosure may be applied to vehicles such as electric vehicles or hybrid vehicles. In addition, the vehicle according to the present disclosure may further include various other components included in the vehicle, for example a body, a motor, and control devices such as an ECU (electronic control unit) in addition to the battery pack.

The terms indicating directions such as upper, lower, left, right, front and rear are used for convenience of description, but it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery pack comprising:
a case providing an inner space and having an opening;
a plurality of battery cells positioned inside the case; and
a cooling channel configured to partition the opening.

2. The battery pack according to claim 1, further comprising:
a venting device configured to communicate with the opening.

3. The battery pack according to claim 2,
wherein the venting device covers the opening.

4. The battery pack according to claim 1,
wherein the cooling channel includes:
a body having a flow path formed therein; and
a spraying portion formed in the body.

5. The battery pack according to claim 4,
wherein the spraying portion is configured to communicate an inside and an outside of the body when a thermal event occurs.

6. The battery pack according to claim 4,
wherein the spraying portion is configured to have a thinner thickness than surroundings.

7. The battery pack according to claim 4,
wherein the spraying portion includes:
an injection hole configured to communicate the inside and the outside of the body; and
a cap configured to block the injection hole.

8. The battery pack according to claim 7,
wherein a melting point of the cap is lower than a melting point of the body.

9. The battery pack according to claim 4,
wherein the cooling channel is formed in plurality, and
wherein the plurality of cooling channels are arranged in an upper and lower direction.

10. The battery pack according to claim 9,
wherein the spraying portion is formed only in an uppermost cooling channel among the plurality of cooling channels.

11. The battery pack according to claim 1, further comprising:
a flow guide provided on an outer surface of the cooling channel.

12. The battery pack according to claim 1, further comprising:
a first mesh cover located between the cooling channel and the plurality of battery cells.

13. The battery pack according to claim 1, further comprising:
a second mesh cover located at an outside of the cooling channel.

14. The battery pack according to claim 1,
wherein the case includes:
a base plate; and
a side wall installed on an upper surface of the base plate,
wherein the opening is formed in the side wall.

15. The battery pack according to claim 1,
wherein the case further includes a heatsink having a cooling flow path formed therein, and
wherein the cooling channel is in communication with the cooling flow path of the heatsink.

16. A vehicle comprising the battery pack according to any one of claims 1 to 15.
